Europäisches Patentamt

European Patent Office

Office européen des brevets

(11) Numéro de publication: **0 071 516**
**B1**

(12) **FASCICULE DE BREVET EUROPEEN**

(45) Date de publication du fascicule du brevet: **26.10.88**

(21) Numéro de dépôt: **82401351.0**

(22) Date de dépôt: **20.07.82**

(51) Int. Cl.⁴: **A 01 B 21/08, A 01 B 49/02**

(54) Outil aratoire pour préparer le sol avant les semailles.

| | |
|---|---|
| (30) Priorité: **24.07.81 FR 8114468** | (73) Titulaire: **Dorez, Jean** <br> **Dampierre** <br> **F-10240 Ramerupt (FR)** |
| (43) Date de publication de la demande: <br> **09.02.83 Bulletin 83/06** | (72) Inventeur: **Dorez, Jean** <br> **Dampierre** <br> **F-10240 Ramerupt (FR)** |
| (45) Mention de la délivrance du brevet: <br> **26.10.88 Bulletin 88/43** | |
| (84) Etats contractants désignés: <br> **AT BE CH DE FR GB IT LI LU NL SE** | (74) Mandataire: **Rodhain, Claude** <br> **Cabinet Claude Rodhain 30, rue la Boétie** <br> **F-75008 Paris (FR)** |
| (56) Documents cités: <br> **DE-A-2 249 983** <br> **FR-A- 408 560** <br> **FR-A-1 306 144** <br> **FR-A-1 321 576** <br> **FR-A-2 296 992** <br> **FR-A-2 369 783** <br> **GB-A- 620 648** <br> **US-A-1 618 076** <br> **US-A-2 613 581** | |

Courier Press, Leamington Spa, England.

## Description

L'invention concerne un outil aratoire destiné notamment à briser les mottes et homogénéiser l'état de surface du sol, pour le préparer aux semailles, cet outil étant attelé à un véhicule tracteur est constitué de disques lisses non tranchants montés sur des axes parallèles disposés l'un derriére l'autre et distants par paire d'un intervalle inférieur au diamètre des disques et montés librement rotatifs sur un châssis, les disques étant fixés à des intervalles réguliers sur chaque axe et ayant une disposition en quinconce d'un axe à l'autre, les disques des deux axes s'interpénétrant pour former une chicane.

Un tel outil est destiné plus particulièrement à briser les mottes et à homogénéiser l'état de surface du sol pour le préparer aux semailles, en particulier aux semis de petites graines telles que betteraves ou similaires. On sait qu'il est nécessaire, dans le cas de petites graines, d'appliquer au sol un traitement particulier, de manière à obtenir une certaine quantité de terre fine sur le dessus pour obtenir un bon contact entre le graine et la terre. Par ailleurs, une grande quantité ou une masse trop importante de grosses mottes à la surface du sol pourrait être nuisible à la régularité du semis. Au contraire, la présence de petites mottes permet de protéger le sol de la "battance".

Pour obtenir ce type de préparation, appelé "lit de semence", on utilise généralement des outils aratoires tels que les croskillettes ou encore des herses à cages roulantes qui sont généralement montées derrière des outils à dents; on peut également utiliser des outils tels que décrits dans la demande de brevet français FR—A—2 296 992 ou dans le brevet américain US—A—2 613 581. Les croskillettes sont constituées d'un châssis supportant des rouleaux formés de disques à dents, emmanchés sur un même axe, ces rouleaux étant disposés transversalement au sens de déplacement du tracteur et pouvant être alignés ou disposés en quinconce dans le sens de la largeur. Le principal inconvénient de ces croskillettes réside dans leur poids qui est d'environ 250 kg par mètre de largeur de travail, de sorte qu'il ne peut pas être envisagé d'atteler un tel outil au relevage hydraulique "trois-points" d'un tracteur en vue de son transport sur route. Il est donc utile et nécessaire d'avoir recours à un bâti transpoteur. En outre, cet outil, du fait qu'il est traîné et non pas porté, ne peut pas être facilement inséré dans une combinaison d'outils, par exemple avec un vibroculteur. Il est donc nécessaire de réaliser plusieurs passages, ce qui provoque inévitablement des tassements répétés du sol, provoqués par les roues du tracteur. De même, cet outil nécessitant une utilisation à grande vitesse, il n'est pas possible de le placer derrière une herse animée. Enfin, la tendance au bourrage des croskillette rend son utilisation délicate, notamment lorsque la terre est quelque peu humide. Il est donc nécessaire dans ce cas d'attendre un certain temps entre le passage de l'outil à dents et celui des croskillettes. Or, on sait que tout retard dans les opérations de préparation du sol peut être néfaste, et même empêcher les semis, si la saison est déjà avancée.

Les herses à cages roulantes sont, quant à elles, et contrairement aux croskillettes, montées derrière un outil à dents et elles sont portées par le relevage hydraulique "trois-points" du tracteur, de sorte qu'elles peuvent être aisément insérées dans une combinaison d'outils; cependant leur efficacité à briser les mottes et à rappuyer le terrain est réduite. Il est donc le plus souvent nécessaire de multiplier les passages de cet outil avec les inconvénients dénoncés ci-dessus, ou encore de terminer la préparation du sol avant les semis à l'aide des croskillettes.

L'invention a pour but de remédier à ces inconvénients et propose un nouveau type d'outil aratoire susceptible, de par son poids, de pouvoir être directement accouplé au relevage "trois-points" du tracteur (ce qui est un gros avantage sur les croskillettes) tout en réalisant une excellente préparation du sol par un cassage régulier des mottes et un bon tassement du sol en raison de la possibilité de régler la pression de l'outil sur le sol, ce qui présente un gros avantage sur les herses à cages roulantes.

L'outil aratoire selon l'invention est notamment remarquable en ce qu'il comporte au moins deux ensembles aratoires alignés côte-à-côte lateralement, et articulés entre eux dans le plan transversal à la direction F de déplacement de l'outil, en ce que chaque ensemble comporte deux paires d'axes parallèles disposées l'une derrière l'autre, les disques étant décalés latéralement d'une paire à l'autre, en ce que chaque ensemble comporte un châssis avec des paliers latéraux supportant les extrémités des axes, lesdites extrémités comportant des moyens pour le montage de disques supplémentaires extérieurs au châssis et en ce qu'il comporte des moyens de réglage destinés à reporter régulièrement une charge extérieure sur chacun des ensembles aratoires.

Selon une autre caractéristique de l'invention le châssis de chaque ensemble aratoire est constitué d'un tronçon (A, B ou C) d'une poutre maîtresse orienté parallèlement aux axes portes-disques, ledit tronçon A, B ou C supportant au moins deux longerons qui lui sont perpendiculaires et sont relies à des barres d'accouplement des axes portes-disques par des biellettes parallèles, articulées respectivement sur ces longerons et sur ces barres d'accouplement de manière à constituer des parallèlogrammes déformables.

D'autres caractéristiques et avantages de l'invention ressortiront de la description ci-après des dessins annexés dans lesquels:

— La Fig. 1 est une vue de dessus illustrant schématiquement le véhicule tracteur et l'outil aratoire conforme à l'invention, dont la représentation n'est que partielle.

— La Fig. 2 est une vue en perspective d'un élément de l'outil.

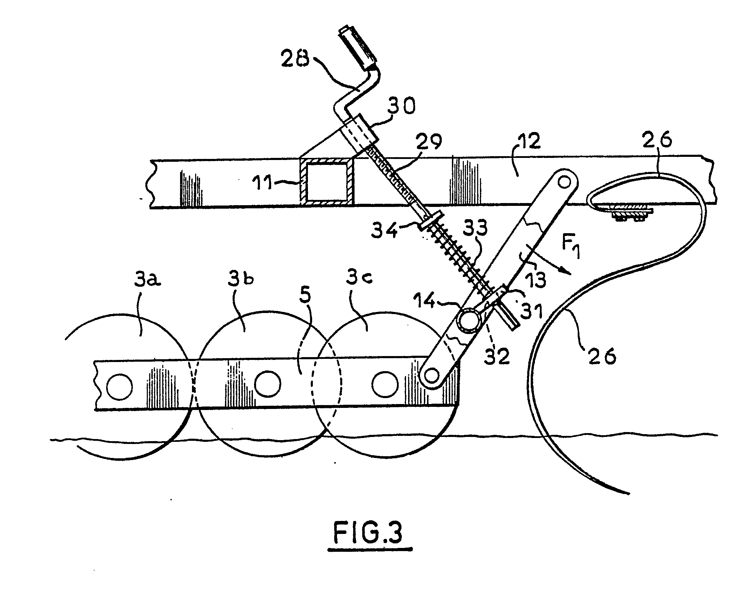

— La Fig. 3 est une vue en plan de l'organe de réglage de la pression de l'outil sur le sol.

Le but essentiel de l'invention est de réalisation un outil aratoire qui puisse, d'une part, réaliser une bonne homogénéisation du sol en brisant les mottes et en rappuyant le terrain selon les conditions requises, et, d'autre part, de pouvoir être, de par son poids, accouplé au relevage hydraulique "trois-points" du tracteur en vue de ses déplacements sur route. Enfin, c'est également un avantage de pouvoir combiner ce type d'outil à un outil à dents du genre vibroculteur ou herse à dents animées par la prise de force du tracteur.

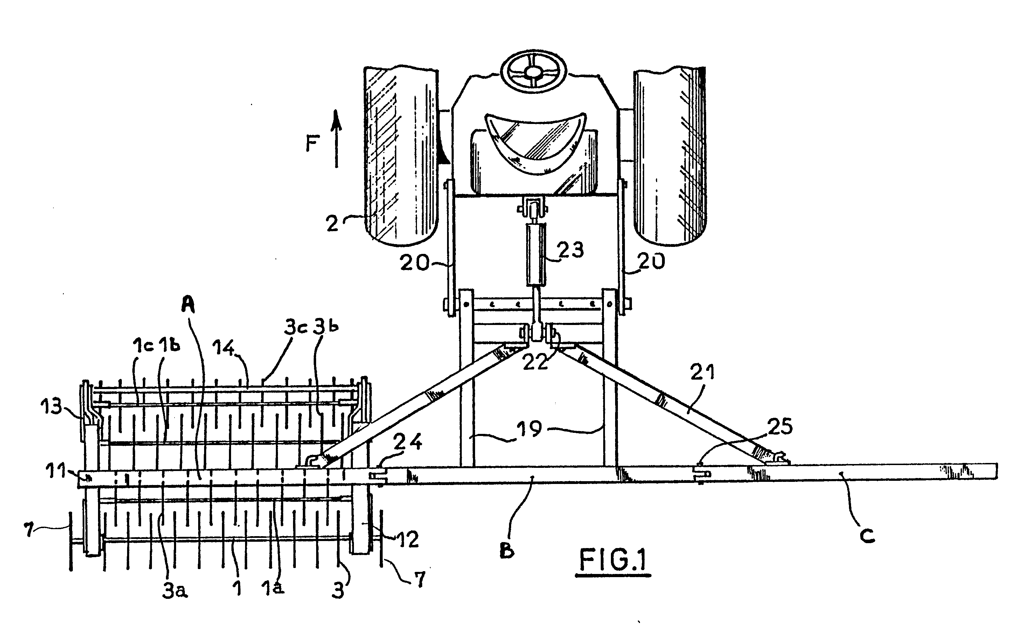

Pour ce faire, et comme illustré en Fig. 1, l'outil selon l'invention est constitué d'au moins deux ensembles aratoires juxtaposés comprenant chacun une première paire d'axes 1 et 1a, disposés dans un même plan et orientés perpendiculairement au sens de déplacement F du véhicule tracteur 2. Sur ces axes sont fixés, par tous moyens appropriés, par exemple par soudure, des disques plans 3, 3a, les disques 3 portés par l'axe 1 étant décalés latéralement des disques 3a portés par l'axe 1a, de manière à réaliser une disposition en quinconce. L'intervalle compris entre les deux axes 1 et 1a est inférieur au diamètre des disques 3, 3a, de manière que ceux-ci s'interpénètrent et forment ainsi une sorte de chicane. Cette première paire d'axes porte-disques est combinée à une seconde paire d'axes 1b, 1c portant des disques plans 3b, 3c disposés de la même manière que les disques 3 et 3a. On remarquera que les disques 3a et 3b sont également disposés en quinconce mais que leurs axes respectifs 1a et 1b sont distants d'un intervalle correspondant sensiblement au diamètre des disques, de sorte qu'il n'y a pas interpénétration desdits disques.

Ces deux paires d'axes porte-disques forment ainsi un ensemble aratoire auquel peut être associé un ou plusieurs autres ensembles identiques alignés ou décalés dans le sens d'avancement du tracteur, pour former si nécessaire une disposition en quinconce à la manière des croskillettes habituelles.

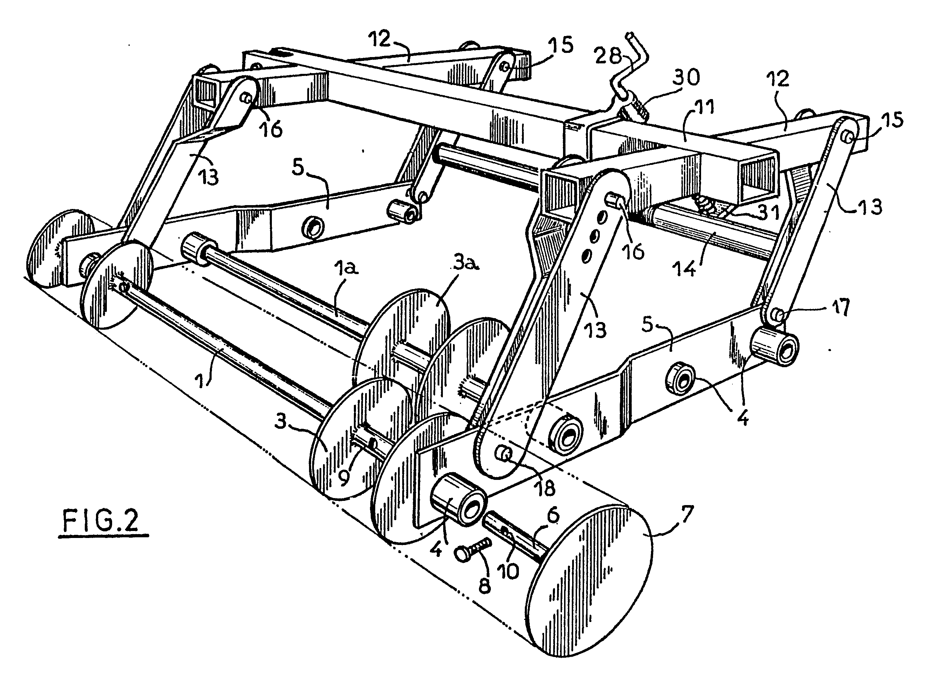

Dans le détail, et tel qu'illustré en Fig. 2, la portion de l'outil visible en Fig. 1 est constituée de deux tronçons de tubes formant les axes 1, 1a, ceux-ci étant supportés dans des paliers autolubrifiants 4, à coussinet en nylon, portés par des barres longitudinales d'accouplement 5, les deux extrémités de ces axes portées par ces paliers (qui sont percées de part en part) recevant des bouts d'axe pleins 6 sur lesquels sont soudés un ou plusieurs disques 7 permettant d'augmenter la largeur totale de l'outil en dehors des barres d'accouplement 5. Ces axes 6 formant essieux sont rendus solidaires des tubes 1, 1a par des clavettes ou goupilles 8 pénétrant dans les orifices radiaux 9 des tubes et les trous 10 des bouts d'axe pleins 6.

Comme illustré sur cette Fig. 2, les disques 3 et 3a sont disposés en quinconce avec interpénétration pour former une chicane dans laquelle viendront se briser les mottes de terre lors du passage de l'outil.

Les barres d'accouplement 5 peuvent recevoir deux ou plus d'axes porte-disques et dans l'exemple illustré en Fig. 2 il est prévu l'emplacement de quatre axes, deux seulement étant représentés pour la commodité du dessin. Les barres d'accouplement 5 sont parallèles entre elles et sont dirigées dans le plan d'avancement du tracteur, ces barres étant reliées à un châssis porteur constitué essentiellement d'un tronçon de poutre maîtresse 11 orientée perpendiculairement au sens de déplacement du tracteur, ce tronçon de poutre supportant deux longerons 12, perpendiculaires à la poutre 11, ces longerons formant, avec les barres d'accouplement et quatre paires de biellettes 13, deux parallèlogrammes déformables reliés entre eux par le tronçon de la poutre maîtresse 11, les axes 1 et 1a et par une traverse 14 située à l'avant de l'outil. Les biellettes 13 sont montées articulées respectivement sur les longerons 12 par des axes 15, 16 et sur des barres d'accouplement par des axes 17, 18. On observe que chaque paire de biellettes est constitué d'une biellette plane prenant appui sur l'une des faces des longerons 12 et d'une biellette contre-coudée, prenant appui sur l'autre face du longeron mais venant, par pliage, se placer dans un plan parallèle à l'autre biellette plane pour être fixée de part et d'autre de la barre d'accouplement 5 qui est d'une largeur sensiblement inférieure à celle des longerons.

Comme illustré en Fig. 1, la poutre maîtresse 11, qui s'étend sur toute la largeur de l'outil, est attelée au relevage "trois-points" du tracteur, d'une part, par deux bras d'attelage 19 situés au même niveau et accouplés aux bras de relevage 20 du tracteur, d'autre part, par deux tirants 21 fixés sur la poutre maîtresse 11 et accouplés par une broche 22 au troisième point 23 du tracteur, de sorte que l'outil est ainsi porté, ce qui permet, par simple relevage, de le décoller totalement du sol en vue de son transport sur route. A ce sujet, le fait de réaliser la poutre maîtresse 11 en plusieurs tronçons A, B, C articulés sur les charnières et axes 24, 25, peut permettre le relevage des deux ensembles de disques d'extrémité dans la largeur hors-tout du tracteur. Dans cette éventualité, les tirants 21 devront évidemment être fixés sur le tronçon médian, ou être amovibles, de manière à permettre le pliage précité.

L'outil, tel qu'il vient d'être décrit, peut être combiné à un second outil tel qu'un vibroculteur ou une herse à dents animées par la prise de force du tracteur, qu'il s'agisse d'une herse à axe vertical (avec dents tournantes) ou d'une herse à dents mobiles transversalement pour réaliser un effet cisaillage. Cet outil est alors situé, dans le sens de déplacement du tracteur, en amont de l'outil selon l'invention, c'est-à-dire que le second outil est situé entre le tracteur et les ensembles à disques. Le second outil tel que herse ayant pour vocation d'ameublir la couche superficielle du sol par la réalisation de sillons, on peut, selon l'invention, faire varier la profondeur de pénétration des dents de la herse, d'une part, en agissant sur le relevage "trois-points" du tracteur, mais également en faisant varier la hauteur existant entre l'extrémité des dents 26 et le point de tangence des disques avec le sol. Pour ce faire, l'outil selon l'invention, comporte un dispositif de réglage permettant de modifier l'angle d'inclinaison des biellettes 13 par rapport aux longerons 12, ce dispositif pouvant être soit de type mécanique soit de type hydraulique, et dans ce dernier cas être alimenté directement par le circuit hydraulique du tracteur. Dans l'exemple illustré, le dispositif est de type mécanique et est constitué d'une manivelle 28 présentant une portion filetée 29 se vissant dans un écrou taraudé 30 solidaire de la poutre maîtresse 11. Cette manivelle est reliée aux biellettes 13 par une chape 31 soudée sur la traverse 14, cette chape comportant un orifice 32 dans lequel peut coulisser librement la tige de la manivelle, cette chape servant par ailleurs à maintenir un ressort amortisseur 33 dont l'autre extrémité vient en appui sur une butée 34 solidaire de la tige de la manivelle. Ainsi les disques sont appuyés sur le sol par ce montage élastique, le ressort 33 sollicitant de façon constante les biellettes 13 dans le sens de la flèche $F_1$. On peut ainsi, par le jeu de la manivelle, faire varier la différence de hauteur entre les dents du vibroculteur et les disques de l'outil, par simple vissage, ce qui permet d'obtenir une pression plus ou moins importante des disques sur le sol, et par suite de réaliser un effet de tassement variable.

Ainsi, l'outil selon l'invention est relativement léger, en raison de ce que les disques sont réalisés de préférence en tôle emboutie, ce qui autorise son accouplement au relevage trois-points du tracteur. En outre, la disposition en quinconce des disques permet un excellent émiettage des mottes afin d'obtenir un état de surface du sol relativement régulier. Enfin, cet outil peut aisément être combiné à d'autres outils et le montage des disques sur les parallélogrammes déformables permet de conserver un terrage égal pour les différents axes support-disques, ce qui évite que certains d'entre eux s'enfoncent plus profondément dans le sol que d'autres. Par ailleurs, le réglage du parallélogramme déformable, à l'aide de la manivelle 28, permet, comme indiqué précédemment, de régler la profondeur de l'outil à dents qui précède l'outil selon l'invention.

Les avantages techniques de l'outil selon l'invention sont donc relativement importants et peuvent être résumés de la façon suivante:

— Le faible poids de l'outil dont il s'agit, (environ la moitié du poids des croskillettes à largeur égale) lui permet d'être porté par le relevage hydraulique du tracteur, et d'entrer facilement dans une combinaison d'outils (outils à dents, plus rouleau à disques), ce qui permet de préparer le lit de semence en un seul passage. Il y a donc gain de temps, et ce système est aussi un moyen efficace de lutter contre le tassement provoqué par les roues de tracteur. En effet, non seulement on limite le nombre de passages avec le tracteur, mais les traces de roues sont effacées par l'outil à dents qui précède le rouleau à disques.

— L'attaque des mottes par un disque de faible épaisseur, même s'il n'est pas tranchant, est très efficace pour les briser, surtout si elles se trouvent prisonnières entre deux disques lorsque le troisième arrive. Or, comme les disques sont disposés de façon régulière, on peut ainsi calibrer la taille des mottes.

— Le fait d'utiliser des disques plats sans aspérité, limité l'adhérence de la terre sur les parois, et par le fait même, permet de travailler dans des conditions de terres plus humides sans qu'il y ait de bourrage. Cet avantage permet et effet de travailler correctement même si certaines particules de terre humides se trouvent remontées d'une couche plus profonde par les dents de l'outil qui précède.

— Le poids réduit de cet appareil permet de ne pas trop tasser le sol si l'on désire casser les mottes sans trop tasser. Mais comme il est monté derrière un outil à dents, on peut éventuellement reporter le poids de cet outil sur les disques, donc un tassement plus énergique si on le désire.

— Le travail effectué par les disques:
briser les mottes,
tasser régulièrement,
répartir les petites mottes en surface,
et la terre fine en dessous,
donne une répartition idéale des agrégats pour un "lit de semence à petites graines".

**Revendications**

1. Outil aratoire destiné notamment à briser les mottes et homogénéiser l'état de surface du sol, pour le préparer aux semailles, cet outil étant attelé à un véhicule tracteur et constitué de disques lisses (3, 3a, 3b, 3c) non tranchants montés sur des axes parallèles disposés l'un derrière l'autre et distants par paire d'un intervalle inférieur au diamètre des disques et montés librement rotatifs sur un châssis, les disques étant fixés à des intervalles réguliers sur chaque axe et ayant une disposition en quinconce d'un axe à l'autre, les disques des deux axes s'interpénétrant pour former une chicane, caractérisé en ce qu'il comporte au moins deux ensembles aratoires alignés côte-à-côte lateralement, et articulés entre eux dans un plan transversal au sens F de déplacement de l'outil, en ce que chaque ensemble comporte deux paires d'axes parallèles (1, 1a;, 1b, 1c) disposées l'une derrière l'autre, les disques (3, 3a; 3b; 3c) étant décalés latéralement d'une paire à l'autre, en ce que chaque ensemble comporte un châssis (5, 11—18) avec des paliers latéraux (4) supportant les extrémités des axes (1, 1a; 1b; 1c), lesdits extrémités comportant des moyens (8—10) pour le montage de disques (7) supplémentaires extérieurs au châssis et en ce qu'il comporte des moyens de réglage (28—34) destinés à reporter régulièrement une charge extérieure sur chacun des ensembles aratoires.

2. Outil aratoire selon la revendication 1, caractérisé en ce que le châssis de chaque ensemble aratoire est constitué d'un tronçon (A, B ou C) d'une poutre maîtresse (11) orienté parallèlement aux axes portes-disques (1, 1a; 1b, 1c), ledit tronçon (A, B ou C) supportant au moins deux longerons qui lui sont perpendiculaires (12) et sont reliés à des barres d'accouplement (5) des axes portes-disques par des biellettes parallèles (13), articulées respectivement sur ces longerons (12) et sur ces barres d'accouplement (5) de façon à constituer des parallélogrammes déformables.

3. Outil aratoire selon la revendication 2, caractérisé en ce que lesdits moyens de réglage sont constitués d'un organe de réglage mécanique ou hydraulique assurant la fixation des biellettes (13) dans les positions angulaires différentes par rapport aux longerons (12).

4. Outil aratoire selon la revendication 3, caractérisé en ce que lesdits moyens de réglage sont constitués d'une manivelle (28) comportant une partie filetée (29) se vissant dans un écrou (30) solidaire de la poutre maîtresse (11), l'extrémité libre de cette manivelle coulissant dans une chape (31) solidaire d'une traverse (14) reliant deux des quatre paires de biellettes articulées (13), avec interposition d'un ressort amortisseur (33) prenant appui respectivement par l'une de ses extrémités sur cette chape, et par son autre extrémité sur une butée (34) solidaire de la manivelle (28).

5. Outil aratoire selon l'une quelconque des revendication 1 à 4, caractérisé en ce que la poutre maîtresse (11) est accouplée au relevage hydraulique "trois points" du tracteur par deux bras d'attelage (19) accouplés aux bras de relevage (20) du tracteur et deux tirants (21) accouplés au troisième point (23).

**Patentansprüche**

1. Landwirtschaftliches Gerät, insbesondere zum Zerkleinern von Schollen und zum Homogenisieren der Bodenoberfläche zur Saatvorbereitung, welches Gerät an eine Zugmaschine angekuppelt wird und aus glatten, nichtschneinenden Scheiben (3, 3a; 3b, 3c) besteht, die auf parallelen Achsen angeordnet sind, welche eine hinter der anderen und paarig in einem Abstand voneinander vorgesehen sind, der kleiner ist als der Scheibendurchmesser, wobei die Achsen frei drehbar an einem Fahrgestell befestigt sind und die Scheiben in regelmässigen Abständen auf jeder Achse befestigt sind und bezüglich einer zur anderen Achse versetzt angeordnet sind, so dass die Scheiben beider Achsen kämmen, um eine Schikane zu bilden, dadurch gekennzeichnet, dass das Gerät wenigstens zwei Bodenbearbeitungseinheiten aufweist, die fluchtend Seite an Seite benachbart angeordnet und in einer quer zur Bewegungsrichtung des Gerätes liegenden Ebene aneinander angelenkt sind, wobei jede Einheit zwei Paare paralleler Achsen (1, 1a; 1b, 1c) umfasst, die hintereinander angeordnet sind, wobei die Scheiben (3, 3a; 3b, 3c) seitlich von einem Paar zum anderen versetzt sind, dass jede Einheit ein Fahrgestell (5, 11—18) mit seitlichen Lagern (4) umfasst, welche die Enden der Achsen (1, 1a; 1b, 1c) tragen, wobei diese Enden Mittel (8—10) zur Anbringung von an der Aussenseite des Fahrgestells angeordneten zusätzlichen Scheiben (7) aufweisen und dass das Gerät Regelvorrichtungen (28—34) umfasst, um regelmässig eine äussere Beladung auf jede der Bodenbearbeitungseinheiten zu übertragen.

2. Gerät nach Anspruch 1, dadurch gekennzeichnet, dass das Fahrgestell jeder Bodenbearbeitungseinheit von einem Abschnitt (A, B oder C) eines Hauptträgers (11) gebildet wird, wobei der Teilabschnitt (A, B oder C), der parallel mit den die Scheiben tragen den Achsen (1, 1a; 1b, 1c) ausgerichtet ist und wenigstens zwei Längsträger trägt, die senkrecht zu ihm stehen (12) und durch parallele Schwingarme (13) mit Spurstangen (5) der scheibentragenden Achsen verbunden sind, wobei die Schwingarme jeweils so an den Längsträgern (12) und den Spurstangen (5) angelenkt sind, dass sie Verformbare Parallelogramme bilden.

3. Gerät nach Anspruch 2, dadurch gekennzeichnet, dass die Regelvorrichtungen von einem mechanischen oder hydraulischen Regelglied gebildet werden, welches die Feststellung der Schwingarme (13) in verschiedenen Winkelstellungen gegenüber den Längsträgern (12) sicherstellt.

4. Gerät nach Anspruch 3, dadurch gekennzeichnet, dass die Regelsvorrichtungen von einer Kurbel (28) gebildet werden, die einen Gewindeabschnitt (29) aufweist, der in eine am Hauptträger (11) festgelegte Mutter (30) eingeschraubt ist, wobei das freie Ende der Kurbel in einer Abdeckung (31) gleitet, die an einer Traverse (14) befestigt ist, welche zwei der vier Schwingarmpaare (13) verbindet, wobei eine Dämpfungsfeder (33) zwischengeschaltet ist, welche sich jeweils mit einem Ende an der Abdeckung und mit dem anderen Ende an einem Widerlager (34) abstützt, welches an der Kurbel (28) angeordnet ist.

5. Gerät nach einem der Ansprüche 1 bis 4, dadurch gekennzeichnen, dass der Hauptträger (11) durch zwei mit dem Hebearm (20) des Traktors gekuppelte Zugarme (19) und zwei mit den dritten Punkt (23) gekuppelte Zugstangen (21) an einen hydraulischen Dreipunkt-Kraftheber des Traktors angekuppelt ist.

**Claims**

1. A plough in particular for breaking up clods and evening out the surface of the soil in order to prepare it for sowing, the plough being harnessed to a tractor and formed of smooth non-cutting disks (3, 3a, 3b, 3c) mounted on parallel shafts, one disposed behind another, spaced in pairs by an interval which is less than the diameter of the disks and mounted so as to rotate freely on a chassis, the disks being fixed at regular intervals on each shaft and having a staggered arrangement from one shaft to the other, the disks of the two shafts interlocking to form a baffle, characterised in that it comprises at least two ploughing units aligned laterally side by side and hinged to one another in a plane transverse to the direction of movement of the plough, in that each unit comprises two pairs of parallel shafts (1, 1a; 1b, 1c) disposed one behind another, the disks (3, 3a; 3b, 3c) being laterally offset from one pair to the other, in that each unit comprises a chassis (5, 11—18) having lateral bearings (4) supporting the ends of the shafts (1, 1a; 1b, 1c), the said ends comprising means (8—10) for mounting supplementary disks (7) external to the chassis and in that it comprises adjusting means (28—34) for transfering regularly an external load to each of the ploughing units.

2. A plough according to claim 1, characterised in that the chassis of each ploughing unit is formed of a section of a beam (A, B or C) of a principal beam (11) arranged parallel to the disk-carrying shafts (1, 1a; 1b, 1c), the said section (A, B, C) supporting at least two side beams (12) which are perpendicular thereto and are connected to coupling bars (5) of the disk-carrying shafts via parallel rocker bars (13) hinged respectively on the side beams (12) and on the coupling bars (5) so as to form deformable parallelograms.

3. A plough according to claim 2, characterised in that the said adjusting means consist of a mechanical or hydraulic adjusting means to ensure that the rocker bars are secured in different angular positions with respect to the side beams (12).

4. A plough according to claim 3, characterised in that the said adjusting means consist of a crank (28) comprising a threaded part (29) which screws into a nut (30) integral with the main beam (11), the free end of the crank sliding into a cap (31) integral with a girder (14) connecting two of the four pairs of hinged rocker bars (13), via a shock-absorbing spring (33), one end of which bears against the said cap and the other end of which bears against a limit stop (34), which is integral with the crank (28), respectively.

5. A plough according to any one of claims 1 to 4, characterised in that the main beam (11) is coupled to the three-point hydraulic lift of the tractor by two harnessing bars (19) connected to the lifting arms (20) of the tractor and two drawing rods (21) coupled to the third point (23).

**FIG.1**

0 071 516

FIG.2

0 071 516

0 071 516

FIG.3

3